# EUROPEAN PATENT APPLICATION

(11) **EP 1 577 973 A1**
(43) Date of publication of application: **21.09.2005**
(21) Application number: 05003079.0
(22) Date of filing: 14.02.2005
(51) Int. Cl.: H01M 10/42, H01M 10/48, H02H 7/18

(54) **Lithium-ion battery with by-passing diodes incorporated in the cell**

(30) Priority: 16.03.2004 JP 2004074590
(71) Applicant: NISSAN MOTOR CO., LTD., Kanagawa 220-8623 (JP)
(72) Inventor: Nagayama, Mori, Yokohama-shi, Kanagawa 236-0025 (JP); Nemoto, Kouichi, Zushi-shi, Kanagawa 249-0003 (JP)
(74) Representative: Grünecker, Kinkeldey, Stockmair & Schwanhäusser Anwaltssozietät

(57) **Abstract**

This invention concerns a secondary battery which ensures safety with a simple structure and promotes exaltation of the service life of battery. This secondary battery is formed by interposing a nonaqueous electrolyte between the positive pole and the negative pole and connecting a group of diodes between the positive pole terminal forming the positive pole and the negative pole terminal forming the negative pole in the direction in which the forward direction voltage is applied. Owing to this structure, the secondary battery is enabled to possess the function of protecting the battery from overcharging and overdischarging even when the voltage is abnormally lowered during the course of discharging.

## Description

### BACKGROUND OF THE INVENTION

### Field of the Invention

This invention relates to a secondary battery which possesses the function of protecting itself from overcharging or overdischarging even when the voltage abnormally rises during the course of charging or when the voltage abnormally falls during the course of discharging.

### Description of Related Art

In recent years, the hybrid electric vehicle (HEV) has begun undergoing reduction into practical use in response to the mounting public consciousness of the environmental problem. The secondary battery is used as the power source for the motor which is mounted on the HEV. In answer to the demand for decreasing size and weight, the thin battery of a high energy density has come to find popular acceptance. The thin battery is formed by laminating a plurality of battery cells each resulting from interposing a nonaqueous electrolyte between positive poles and negative poles each of the shape of a sheet.

The individual battery cells which form the thin battery are so produced as to assume as uniform a volume as permissible. Since the positive poles, the negative poles, and the nonaqueous electrolyte layers nevertheless cannot be formed equally in thickness and surface area, however, the individual battery cells are suffered to have their volumes dispersed to a certain extent. When the battery cells have their volumes dispersed, those of smaller volumes are first charged fully to capacity during the course of charging and those of such small volumes tend to be rather overcharged.

Meanwhile, during the course of discharging, the battery cells of smaller volumes first complete discharging, the battery cells having small volumes tend to be rather overdischarged. Since the overcharging and the overdischarging of a battery largely affect the service life of the battery, such controls as bypassing or blocking the battery cell depending on the voltage of the battery cell is resorted to with the object of eliminating this inconvenience as disclosed in the official gazette of JP-A 2002-369399, the official gazette of JP-A 2002-25628, and the specification of Patent No. 3331529.

Incidentally, when the techniques disclosed in these patent documents are applied to the secondary battery, they possibly result in varying the impedance of the secondary battery as a whole and degrading the performance of the secondary battery under the influence of the separated battery cells and they also necessitate a complicated control circuit for keeping a constant watch on the voltages of the individual battery cells and effecting a control for separating or blocking the battery cells which have developed abnormal voltages.

### BRIEF SUMMARY OF THE INVENTION

This invention has originated in the light of such problems of the prior art as mentioned above and is aimed at providing a secondary battery which, by having a group of diodes connected between a positive pole and a negative pole of a secondary batter, is enabled to secure safety and design exaltation of the service life of a battery with a simple structure.

For the purpose of accomplishing this object, the secondary battery contemplated by this invention is a secondary battery of a construction having a nonaqueous electrolyte interposed between a positive pole and a negative pole and having the group of diodes connected between the positive pole terminals forming the positive pole and the negative pole terminals forming the negative pole in a direction in which the voltage of the forward direction is applied.

### BRIEF DESCRIPTION OF THE DRAWINGS

Fig. 1 is an outline drawing of a secondary battery according to the present mode of embodiment.
Fig. 2 is a cross section taken through the secondary battery illustrated in Fig. 1 along the line A-A.
Fig. 3 is a concrete schematic diagram of the secondary battery using a bipolar electrode illustrated in Fig. 2.
Fig. 4 is a diagram schematically illustrating the construction of battery cells and a group of diodes.
Fig. 5 is an electrically equivalent circuit diagram of the construction illustrated in Fig. 4.
Fig. 6 is a voltage-amperage characteristic diagram of the group of diodes shown in Fig. 5.
Fig. 7 is a diagram illustrating another mode of the group of diodes; A depicting a mode of six series of diodes, B a mode of 3 series of diodes, and C a mode of two parallel rows each of six series of diodes.
Fig. 8 is a concrete schematic diagram of the secondary battery in a mode of having battery cells in parallel connection.
Fig. 9 is a diagram schematically illustrating a structure of battery cells and a group of diodes.
Fig. 10 is a diagram schematically illustrating a structure of battery cells and a group of diodes.
Fig. 11 is an electrically equivalent circuit diagram of the structure shown in Fig. 10.
Fig. 12 (a) through (d) are diagrams schematically illustrating a process for the production of a group of diodes.
Fig. 12 (e) through (g) are diagrams schematically illustrating a process for the production of a group of diodes.
Fig. 13 (a) through (d) are diagrams schematically illustrating a process for the production of a group of diodes.
Fig. 13 (e) through (g) are diagrams schematically illustrating a process for the production of a group of diodes.
Fig. 14 (a) through (e) are diagrams schematically illustrating a process for the production of a group of diodes.
Fig. 14 (f) through (j) are diagrams schematically illustrating a process for the production of a group of diodes.
Fig. 15 is a schematic diagram of a built-up battery; A depicting a top view of the built-in battery, B depicting a partially broken cross section of the built-in battery, and C depicting a partially broken front view of the built-in battery.
Fig. 16 is a diagram illustrating the state of having the built-in battery mounted on a vehicle.

### DETAILED DESCRIPTION OF,THE INVENTION

Now, the structure of the secondary battery according to this invention will be described as divided into "mode 1 of embodiment" through "mode 3 of embodiment" and one example of the process for the production of a group of diodes in the secondary battery will be described in detail below with reference to the drawings attached hereto.

### Structure of secondary battery

### [Mode 1 of embodiment]

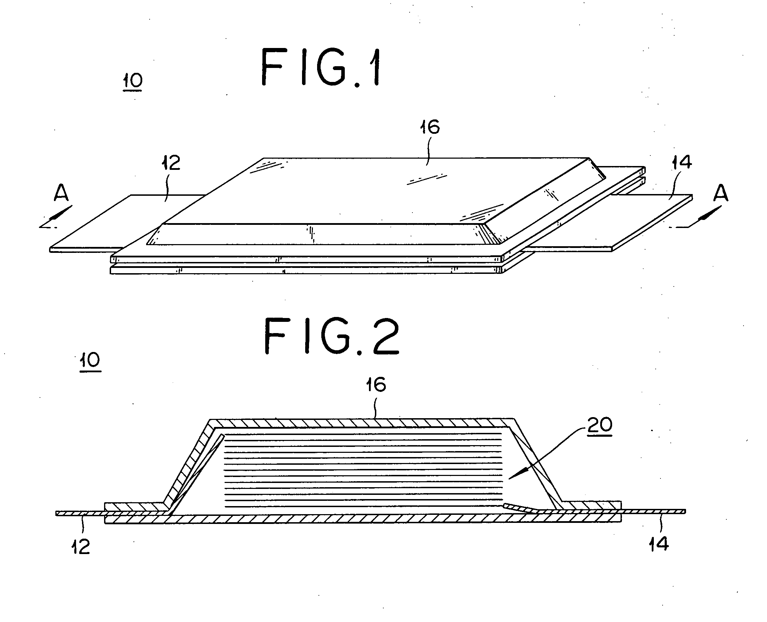

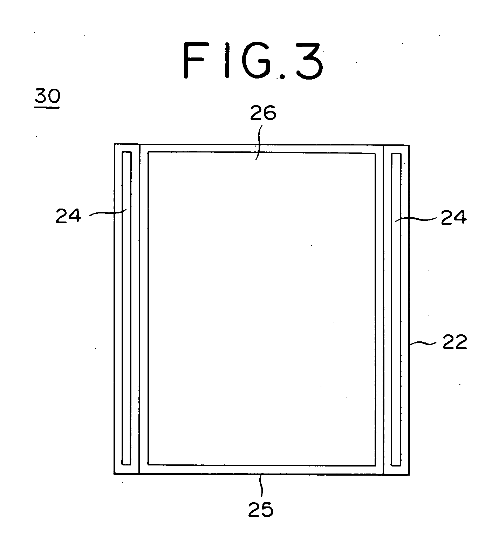

Fig. 1 is an outline drawing of the secondary battery according to the present mode of embodiment, Fig. 2 is a cross section taken through the secondary battery shown in Fig. 1 along the line A-A, and Fig. 3 is a concrete schematic diagram of a bipolar electrode shown in Fig. 2. In the secondary battery of the present mode of embodiment, a group of diodes are connected between positive pole terminals forming a positive pole and negative pole terminals forming a negative pole in a direction in which the forward direction voltage is applied.

A secondary battery 10 according to the present mode of embodiment is a thin battery in a rectangular shape as illustrated in Fig. 1, having a positive pole tab 12 and a negative pole tab 14 drawn out of the opposite short sides thereof. The positive pole tab 12 and the negative pole tab 14 are connected to a battery element 20 in a laminate film 16 which is a sheathing material for the secondary battery 10 as illustrated in Fig. 2. The battery element 20 is what is formed by laminating a plurality of bipolar electrodes each having a positive pole layer and a negative pole layer disposed on the opposite sides of a current collecting body, with a solid electrolyte interposed between the adjacent superposed bipolar electrodes. It consequently assumes a structure in which a plurality of battery cells each formed of a laminated body of a current collecting body (negative pole terminal) -a negative pole layer - a solid electrolyte - a positive pole layer - a current collecting body (positive pole terminal) are connected in series.

A diode forming region 24 intended to form a group of diodes is disposed on one side of each of current collecting bodies 22 which form a bipolar electrode 30 as illustrated in Fig. 3. The group of diodes are formed on the current collecting body 22 by using the semiconductor forming technique. The group of diodes are connected in such a direction that the forward direction voltage may be applied between the positive pole terminals and the negative pole terminals. On one side of the current collecting body 22, a negative pole layer 26 is formed so as to detour a sealing part 25 serving to secure insulation. On the other side of the current collecting body 22, a positive pole layer (not shown) is formed so as to detour a sealing part (not shown) disposed on that side.

While Fig. 3 depicts the disposition of diode forming regions 24 one each on both sides of the bipolar electrode 30, this disposition may be limited to either of the sides when the electric current flowing through the group of diodes is not very large. In the case of the bipolar electrode 30, a current collecting body and a positive pole layer form a positive pole and a current collecting body and a negative pole layer form a negative pole. Further, the current collecting body of the positive pole serves as a positive pole terminal and the current collecting body of the negative pole serves as a negative pole terminal.

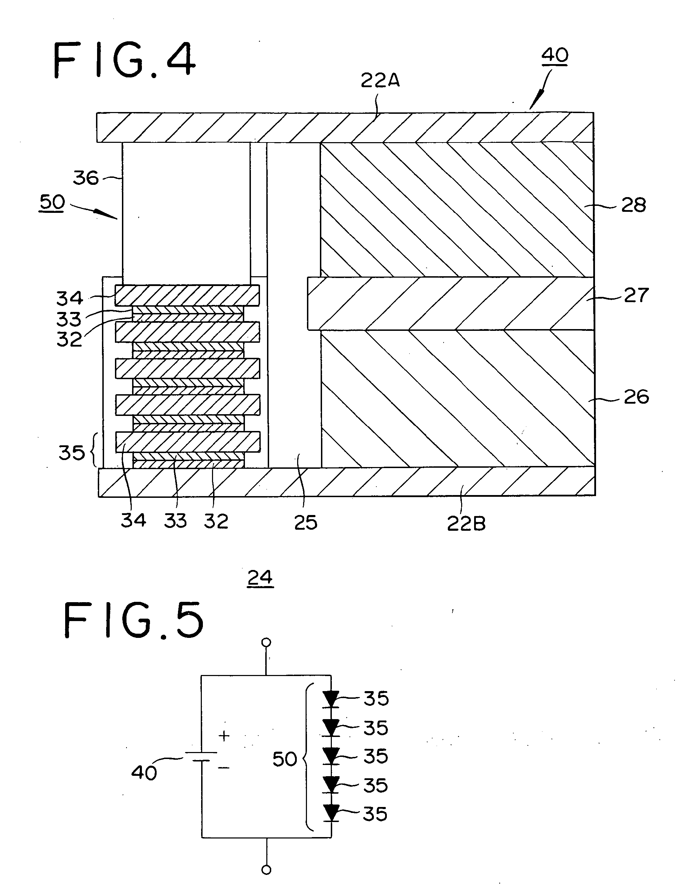

Fig. 4 is a diagram schematically illustrating the structure of battery cells and the group of diodes. A battery cell 40 is formed by laminating a current collecting body 22A destined to serve as a positive pole terminal, a positive pole layer 28, a solid electrolyte (nonaqueous electrolyte) 27, a negative pole layer 26, and a current collecting body 22B destined to serve as a negative pole terminal. The group of diodes 50 result from laminating stepwise five diode elements 35 each formed by laminating an N-type semiconductor layer 32, a P-type semiconductor layer 33, and a metal layer 34 on the diode forming region 24 of a current collecting body 22B and connecting them to the current collecting body 22A destined to serve as a positive pole terminal through the medium of an electrically conducting adhesive agent layer 36. The group of diodes 50 are electrically insulated from the positive pole and the negative pole by the sealing part 25. The battery cell 40 has a thickness in the approximate range of 50 - 100 µm and the five diode elements 35 excluding the electrically conducting adhesive agent layer 36 have a total thickness of about 20 µm.

The structure shown in Fig. 4 is fated to assume such an electrically equivalent circuit as illustrated in Fig. 5. To be specific, an anode of the group of diodes 50 is connected to the positive pole side of the battery cell 40 and the cathode of the group of diodes 50 is connected to the negative pole side thereof.

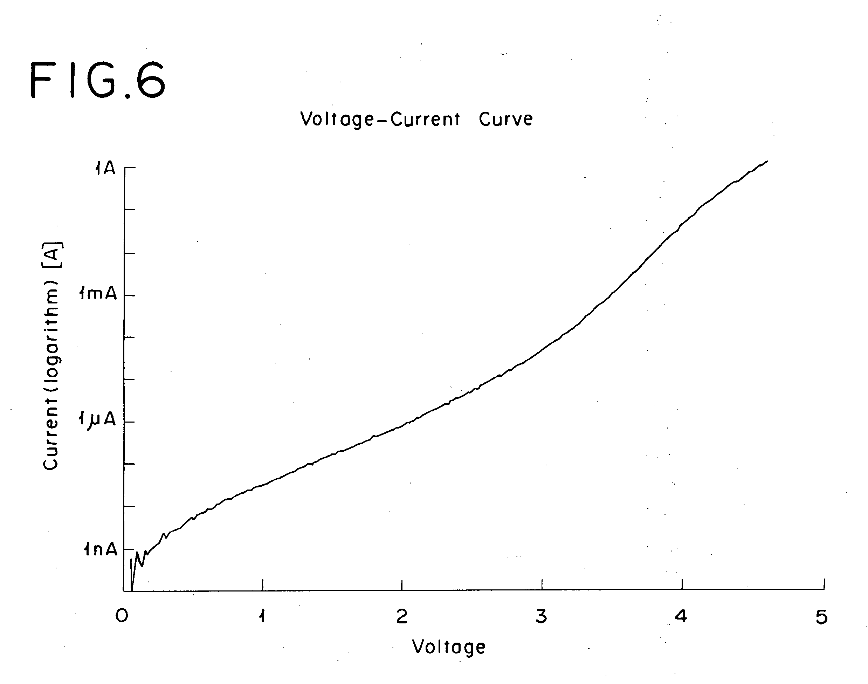

The group of diodes 50 are connected in the forward direction to the battery cell 40. Since the group of diodes 50 are adapted to be connected in series to the five diode elements 35, the voltage at which a large electric current begins to flow to the group of diodes 50 is five times the voltage at which a large electric current begins to flow to the individual diode elements 35. A general diode element 35 allows substantially no flow of electric current till the forward direction voltage reaches about 0.6 V (it may as well be regarded as a near equivalent to an insulator). Thus, the group of diodes 50 which is formed by serially connecting five diode elements 35 allow virtually no flow of electric current till the voltage reaches about 3.0 V as shown in Fig. 6.

To be specific, when the voltage of the battery cell 40 exeeds 3 V and reaches a level of not lower than 3.5 V, the electric current begins to flow gradually to the group of diodes 50 (the insulator changes to a conductor) and the charging speed of the battery cell decreases gradually (the electric current is bypassed). When the voltage further increases and eventually exceeds 4 V, the electric current nearly wholly flows toward the diodes and the voltage of the battery cell 40 finally becomes restricted by the voltage which follows the voltage-amperage characteristic property of the group of diodes 50.

The conventional secondarybatterypossesses a structure in which a plurality of battery cells 40 are connected in series. The voltage applied to the individual battery cells 40 during the course of charging, therefore, is the voltage which results from dividing the charging voltage to the individual battery cells 40 proportionately to their capacities. Since the voltage applied during the course of charging varies between the battery cell having a large capacity and the battery cell having a small capacity, some of the battery cells expose themselves to application of unduly large voltages and eventually suffer from overcharging.

Incidentally, the secondary battery conforming to the present mode of embodiment has the battery cells individually provided with the group of diodes 50, the charging begins to be controlled after the battery voltage reaches about 3.5 V and eventually controlled to the voltage corresponding to the electric current shown in Fig. 6 without reference to the magnitude of the electric current advanced to the individual battery cells during the course of charging. Even when the individual battery cells 40 have different capacities, all the battery cells are prevented from succumbing to overcharging unless the electric current exceeds the prescribed magnitude.

If the electric current exceeds the prescribed magnitude, the excess will encounter extreme difficulty in growing into an overcharging hugely surpassing the safe region and inducing abnormality because the rise of the electric current in the diodes is steep. Particularly when the secondary battery is put to such use in a hybrid electric vehicle as to necessitate charging and discharging to be repeated in a brief period, since the electric current by-passing the diodes is not large up to the neighborhood of 4 V, the energy of the battery can never be consumed instantaneously in the diodes and the energy once stored in the battery can be effectively discharged at the timing of prompting the next cycle of discharging. The degree of the voltage to be used and the amount of the electric current to be passed in this case can be freely determined by the number of diodes connected in series, the number of diodes connected in parallel, and the surface area of the array of diodes.

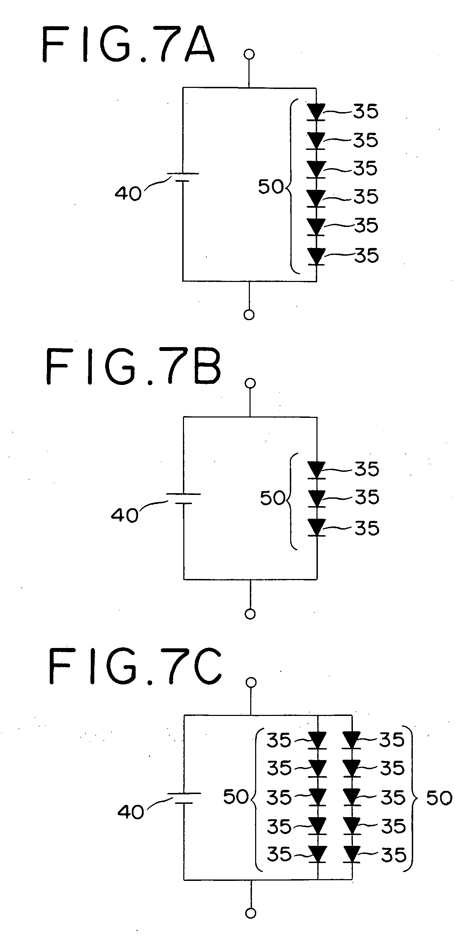

For the purpose of setting the optimum charging voltage of the battery cell 40 at a little short of 4 V, for example, it suffices to form the group of diodes 50 by having six diode elements 35 connected in series as shown in Fig. 7A. Then, for the purpose of setting the optimum charging voltage of the battery cell 40 at a little short of 2 V, it suffices to form the group of diodes 50 by having three diode elements 35 connected in series as shown in Fig. 7B. Further, when the large electric current is required to be by-passed while the optimum charging voltage of the battery cell 40 does not need to be varied, it suffices to cause two groups of diodes 50 each formed by having five diodes elements 35 connected in series to be connected in parallel as shown in Fig. 7C.

To be specific, it suffices to form a group of diodes 50 in each of the two diode forming regions 24 of the current collecting body 22B and form two groups of diodes 50 for one battery cell 40 as shown in Fig. 3 or double the surface area of the diode forming region 24 and form the group of diodes 50 in the resultant region. Further, the fine adjustment of the voltage-amperage characteristic property of the group of diodes 50 may be realized by diversifying the kind of diode elements 35 forming the group of diodes 50.

In the case of silicon diodes, the voltage at which the electric current begins to flow through the diodes connected in the forward direction is about 0. 6 V. In the case of germaniumdiodes, this voltage is about 0.1 V. By forming the group of diodes 50 by mixing silicon diodes and germanium diodes, therefore, it is made possible to obtain an arbitrary voltage-amperage characteristic property.

The battery of a bipolar structure is characteri zed by generating a high voltage by one cell and entailing only a low resistance but encountering difficulty in effecting control of voltage by the battery cell unit. By incorporating a plurality of diode elements in a battery cell as contemplated by this invention, it is made possible to line up the charged state automatically in spite of more or less dispersion of capacity among the diode elements during the course of manufacture and consequently manufacture a battery of a bipolar structure of a high reliability at a very low cost.

Incidentally, the diode element is only a component resulting from uniting an n-type semiconductor and a p-type semiconductor. When a plurality of such diode elements are to be used, therefore, it is commendable to have them integrated into a single element. The formation of diode elements on the current collecting body of the battery cell is at an advantage in giving rise to a very simple structure without requiring to provide the secondary battery in the outer part thereof with a protective circuit as a separate item. Further when the electric current of a large amount flows through the diode elements, abnormal generation of heat can be avoided because the current collecting body serves as a radiator plate.

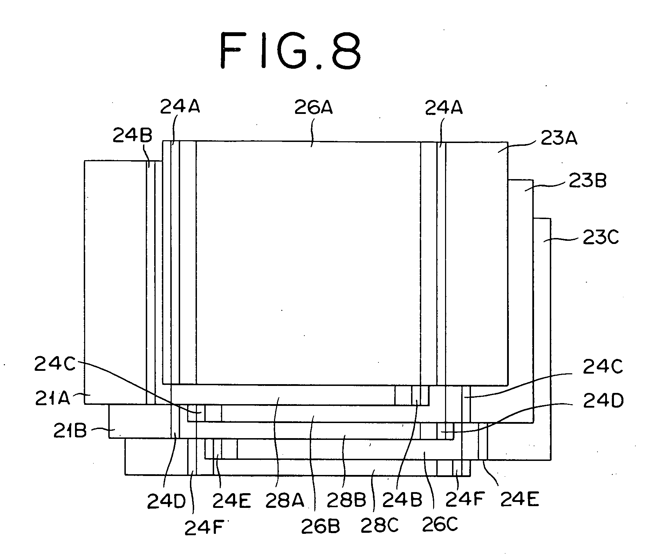

Though the foregoing present mode of embodiment has depicted a secondary battery using a bipolar electrode 30, namely a bipolar secondary battery, this invention can be applied to a secondary battery of a pattern having battery cells connected in parallel as illustrated in Fig. 8.

Negative pole layers 26A, 26B, and 26C and diode forming regions 24A, 24C, and 24E are respectively formed on one side each of negative pole current collecting bodies 23A, 23B, and 23C as illustrated in Fig. 8. Then, positive pole layers 28A, 28B, and 28C and 24B, 24D, and 24F are respectively formed on one side each of positive pole current collecting bodies 21A, 21B, and 21C. The group of diodes 50 are formed on these current collecting bodies by using the semiconductor forming technique and the group of diodes 50 are connected between the positive pole terminal and the negative pole terminal in the direction in which the forward direction voltage is applied. The negative pole current collecting bodies 23A, 23B, and 23C and the positive pole current collecting bodies 21A, 21B, and 21C are alternately laminated as illustrated in the diagram, with a nonaqueous electrolyte is interposed between each negative pole layer or each positive pole layer and each current collecting body. The negative pole current collecting bodes 23A, 23B, and 23C are bundled collectively on the right side in the bearings of the diagram and have the negative pole tub 14 attached thereto as shown in Fig. 1.

The positive pole current collecting bodies 21A, 21B, and 21C are bundled collectively on the left side in the bearings of the diagram and have the positive pole tab 12 attached thereto as shown in Fig. 1. The secondary battery of this type, therefore, turns out to be a product which results from connecting battery cells (formed between the positive pole current collecting body and the negative pole current collecting body) in parallel. The group of diodes 50 are fated to control the voltage during the charging of the individual battery cells connected in parallel in accordance with the characteristic property of the group of diodes 50 and are enabled to control the voltage on the battery cell unit.

The bipolar secondary battery mentioned above is a product which results from connecting a plurality of battery cells in series and, therefore, constitutes the most suitable battery for a load requiring a comparatively high voltage. The secondary battery of the type mentioned above is a product which results from connecting a plurality of battery cells in parallel and, therefore, constitutes the most suitable battery for a load requiring a comparatively large electric current.

### [Mode 2 of embodiment]

The mode 1 of embodiment has illustrated the formation of the group of diodes by laminating diode elements 35 in the same direction as the direction of lamination of battery cells. In the present mode of embodiment, the group of diodes 50 is formed by connecting diode elements 35 in series along the longitudinal direction of the surfaces of the current collecting bodies.

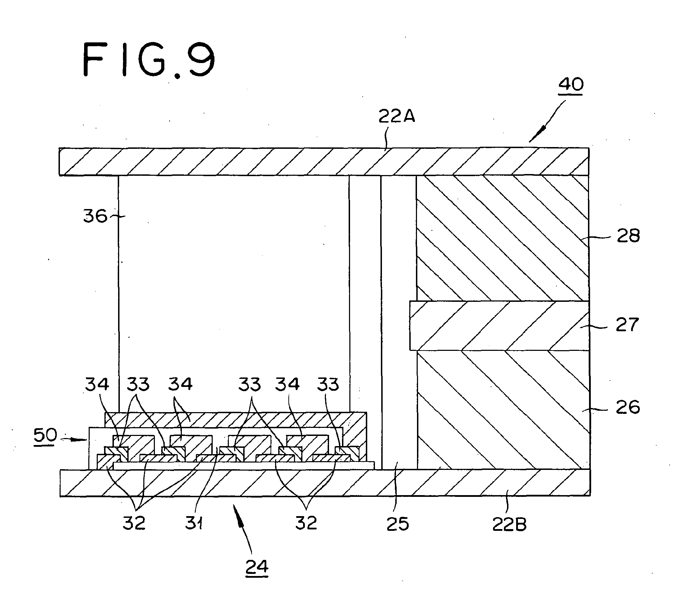

Fig. 9 is a diagram schematically illustrating the structure of a battery cell and the group of diodes. The battery cell 40 is formed by laminating the current collecting body 22A destined to serve as a positive pole terminal, the positive pole layer 28, the solid electrolyte (nonaqueous electrolyte) 27, the negative pole layer 26, and the current collecting body 22B destined to serve as a negative pole terminal. Then, the group of diodes 50 is formed by sequentially laminating the N -type semiconductor layer 32, the P-type semiconductor layer 33, the metal layer 34, and the insulating layer 31 through the medium of the insulating layer 31 on the diode forming region 24 of the current collecting body 22B as illustrated in the diagram and causing five serially connected diode elements 35 to the current collecting body 22A destined to serve as the positive pole terminal through the medium of the metal layer 34 and the electrically conducting adhesive agent layer 36. The group of diodes 50 are electrically insulated from the positive pole and the negative pole by means of the sealing part 25.

The structure shown in Fig. 9 forms the same electrically equivalent circuit as in the mode 1 of embodiment which is shown in Fig. 5. That is, the anode of the group of diodes 50 is connected to the positive electrode side of the battery cell 40 and the cathode of the group of diodes 50 is connected to the negative pole side thereof.

Since the function of the group of diodes 50 is the same as described in the mode 1 of embodiment, it will be omitted from the following description.

### [Mode 3 of embodiment]

The modes 1 and 2 of embodiment have illustrated a structure having all the diode elements 35 forming the group of diodes 50 connected in the forward direction. The present mode of embodiment, however, forms the group of diodes 50 which include diode elements 35 connected in the reverse direction.

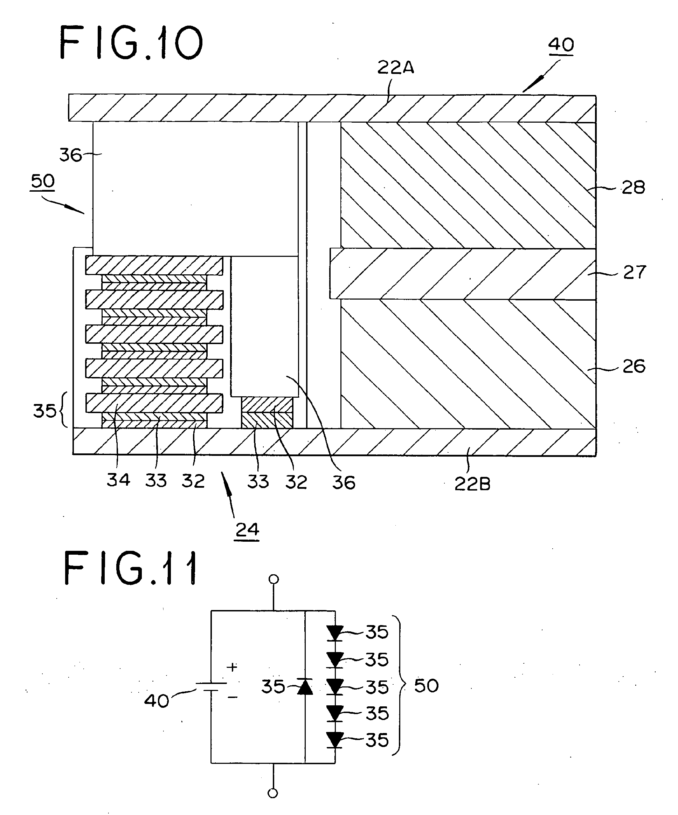

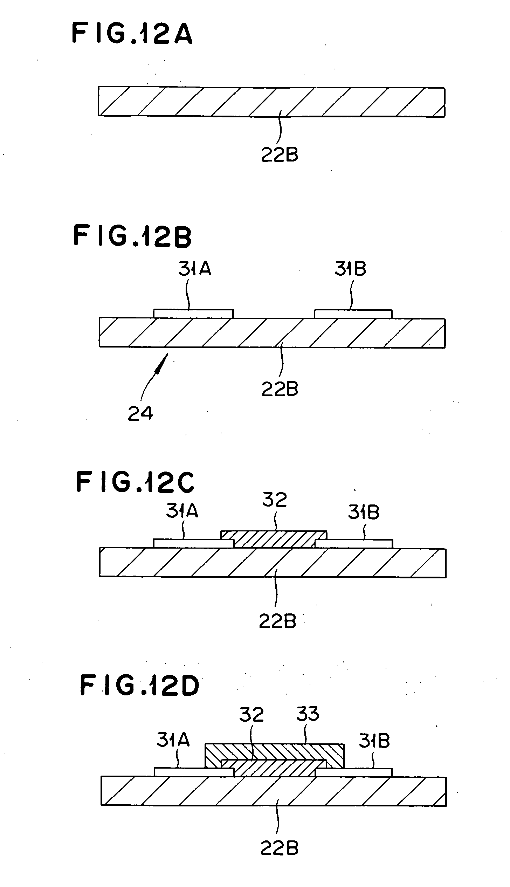

Fig. 10 is a diagram schematically illustrating the structure of a battery cell and the group of diodes. The battery cell 40 is formed by laminating the current collecting body 22A designed to serve as a positive pole terminal, the positive pole layer 28, the solid electrolyte (nonaqueous electrolyte) 27, the negative pole layer26, and the current collecting body 22B destined to serve as a negative pole terminal. Then, the group of diodes 50 is formed by causing five stages of diode elements 35 each resulting from laminating the N-type semiconductor layer 32, the P-type semiconductor layer 33, and the metal layer 34 on the diode forming region 24 of the current collecting body 22B and just one stage of the P-type semiconductor layer 33 and the N-type semiconductor layer laminated parallelly thereto to be connected to the current collecting body 22A designed to serve as the positive pole terminal through the medium of the electrically conducting adhesive agent layer 36. The group of diodes 50 are electrically insulated from the positive pole and the negative pole by means of the sealing part 25.

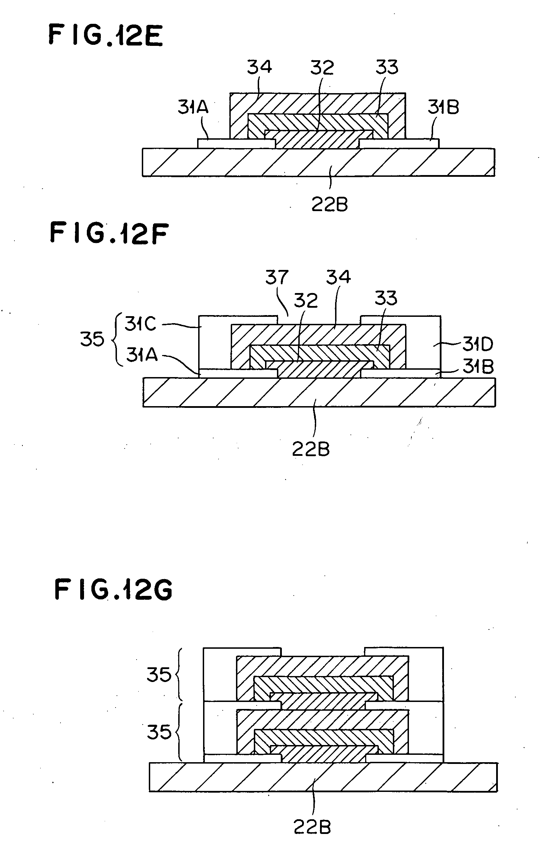

The structure shown in Fig. 10 assumes such an electrically equivalent circuit as shown in Fig. 11. That is, the anode of five serially,connected diode elements 35 is connected to the positive pole side of the battery cell 40 and the cathode thereof to the negative pole side thereof and the cathode of one diode element 35 is connected parallelly thereto to the positive pole side of the battery cell 40 and the anode thereof to the negative pole side thereof.

Of the diode elements 35 which form the group of diodes 50, the five serially connected diode elements 35 are connected in the forward direction to the battery cell 40 during the course of charging. The voltage at which the electric current of a large amount begins to flow to the group of diodes 50, therefore, is five times the voltage at which the electric current of a large amount begins to flow to the individual diode elements 35. The general diode elements 35 allow flow of virtually no electric current therethrough till the voltage in the forward direction reaches about 0. 6 V. In the group of diodes 50 formed by connecting five diode elements in series, therefore, allow flow of virtually no electric current therethrough till the voltage reaches about 3.0 V as shown in Fig. 6. Meanwhile, of the diode elements 35 which form the group of diodes 50, one diode element 35 is connected in the reverse direction to the battery cell 40. As a natural consequence, this diode element 35 allows flow of virtually no electric current at a voltage of about 3.0 V.

That is, when the voltage of the battery cell 40 exceeds 3 V and reaches a level of not lower than 3 . 5 V during the course of charging, the electric current abruptly begins to flow to the group of diodes 50 and the electric current ceases to be supplied to that battery cell (because it is by-passed) and the voltage of the battery cell 40 is eventually controlled to the magnitude conforming to the voltage-amperage characteristic property of the group of diodes 50.

Since the conventional secondary battery possesses a structure of having a plurality of battery cells 40 connected in series, the voltages applied to the individual battery cells 40 during the course of charging assume the magnitudes resulting from dividing the charging voltage in accordance with the capacities of the individual battery cells 40. Since the applied voltages during the course of charging are different between the battery cells having large capacities and the battery cells having small capacities, some of the battery cells are fated to be overcharged in consequence of the application of an unduly large voltage. The secondary battery conforming to the present mode of embodiment, however, has the battery cells individually provided with the group of diodes 50 including the serially connected diode elements 35, the voltage is eventually controlled to the magnitude of about 3.5 V without reference to the magnitude of the voltage applied to the individual battery cells during the course of charging. Even when the individual battery cells 40 have different capacities, all the battery cells are prevented from succumbing to overcharging unless the electric current exceeds the prescribed magnitude.

Conversely, during the course of discharging, since one diode element 35 of all the diode elements 35 forming the group of diodes 50 is connected in the reverse direction to the battery cell 40, virtually no electric current flows till the voltage reaches about -0.6 V. When a negative voltage exceeding this level begins to be applied, the electric current of a large amount begins to flow. Meanwhile, of the diode elements 35 which form the group of diodes 50, the five diode elements 35 which are connected in series are connected in the forward direction to the battery cell 40, it naturally follows that virtually no electric current flows at the voltage of about -0.6 V.

In other words, when the voltage of the battery cell 40 exceeds -0 . 6 V during the course of discharging, the electric current abruptly begins to flow to the group of diodes 50 and the electric current ceases to be supplied from that battery cell (the current is by-passed) and the voltage of the battery cell 40 is eventually controlled by the magnitude conforming to the voltage-amperage characteristic property of the group of diodes 50. The secondary battery conforming to the present mode of embodiment, therefore, has the voltage thereof controlled to about -0.6 V during the course of discharge even in the worst case because it is provided with the group of diodes 50 including diode elements 35 connected in the reverse direction to the individual battery cells. Thus, all the battery cells are prevented from succumbing to overcharging even when the individual battery cells 40 have different capacities.

When the diode elements are connected in the forward direction, the possibility that the battery cells having lost capacity balance will be overcharged during the course of charging ceases to exist. When the charging is completed and shifted to discharging, the batteries having small capacities fall in the state of overdischarging during the course of discharging. When the battery voltage continues the state of positive-negative reversal, the capacity is abruptly aggravated because the electrolyte of the battery continues decomposition and the current collecting body undergoes liquation. By having one diode element connected in the reverse direction to the battery cell, the battery is enabled to avoid sudden deterioration because the possibility that a potential of not more than -0. 6 V will be applied to the battery ceases to exist. It is permissible to use a structure having a plurality of diode elements connected in series in conformity to the magnitude of the electric current to be passed.

### Process for production of a group of diodes

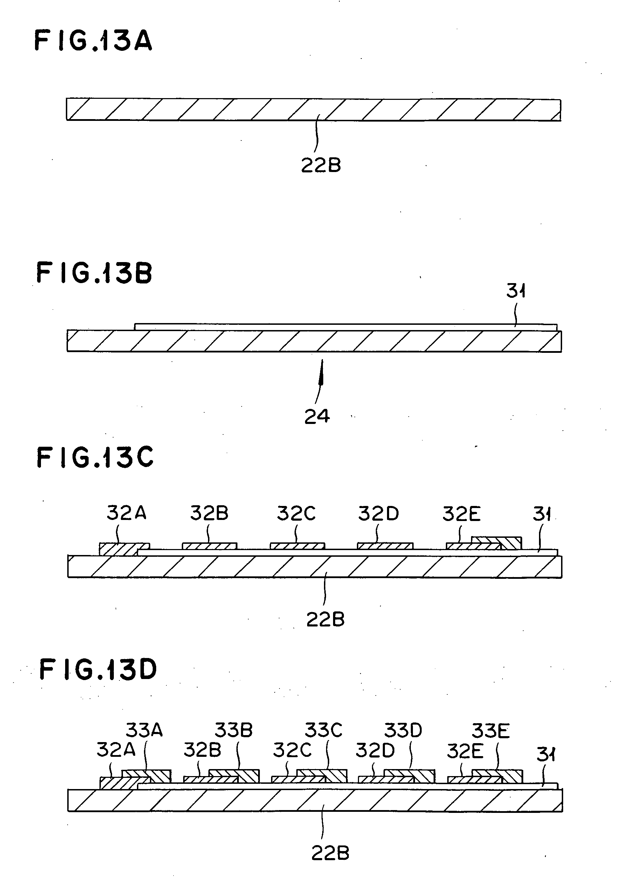

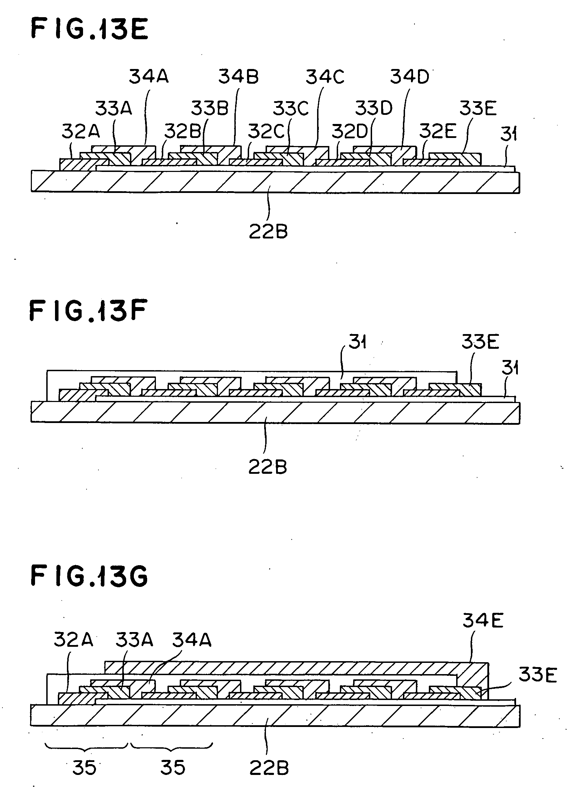

Now, the process for the production of the group of diodes 50 will be described below in an outlined form with reference to Fig. 12A - Fig. 14B.

The process of production illustrated in Fig. 12A and Fig. 12B is a procedure which is intended to form a group of diodes 50 by laminating diode elements 35 as described in the mode 1 of embodiment (Fig. 4).

For a start, the current collecting body 22B which is shown in (a) is prepared and the insulating layers 31A and 31B which are shown in (b) are formed as parted by a prescribed distance on the diode forming region 24 of the current collecting body 22B. Next, the N-type semiconductor layer 32 is formed so as to fill up the interval between the insulating layers 31A and 31B as shown in (c) . Then, the P-type semiconductor layer 33 is formed so as to cover the N-type semiconductor layer 32 as shown in (d). Further, the metal layer 34 is formed so as to cover the P-type semiconductor layer 33 as shown in (e) . Then, the insulating layers 31C and 31D are formed so as to cover the metal layer 34 except the part of a contact hole 37 with the overlain N-type semiconductor layer 32 as shown in (f).

The steps described thus far will form one diode element 35. The formation of another diode element 35 laminated on this diode element 35 is accomplished by repeating the steps of (a) through (f) mentioned above and finishing the lamination as shown in (g). In the case of the mode 1 of embodiment, since five diode elements 35 are laminated, the foregoing steps of (a) through (f) are carried out up to five repetitions.

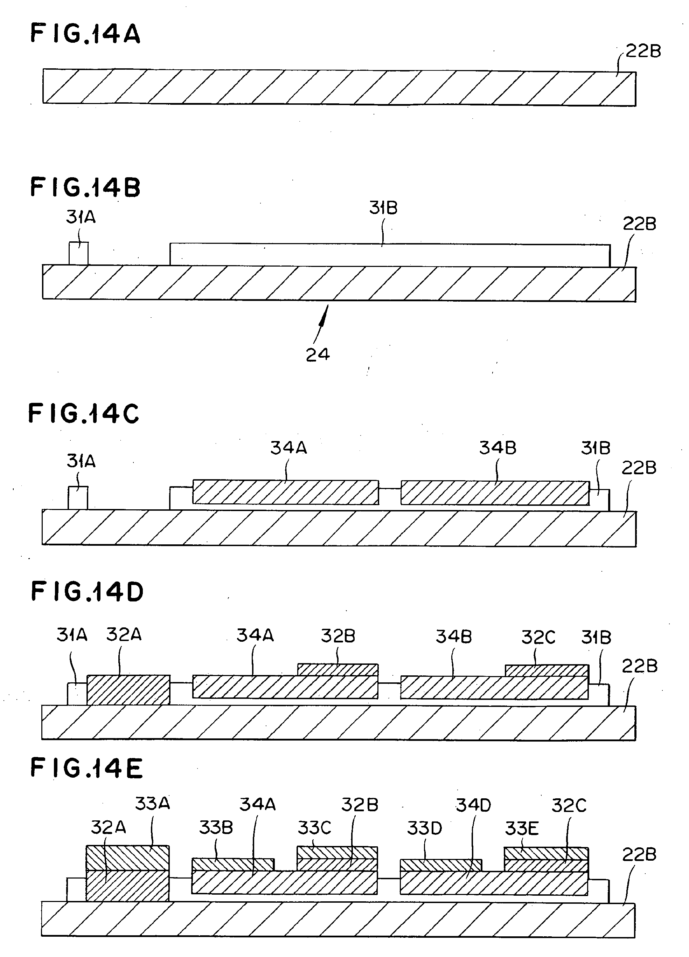

The process of production illustrated in Fig. 13A and Fig. 13B is a procedure which is intended to form a group of diodes 50 by lining diode elements 35 in the lateral direction of the current collecting body as described in the mode 2 of embodiment (Fig. 9).

For a start, the current collecting body 22B which is shown in (a) is prepared and the insulating layer 31 which is shown in (b) is formed uniformly on the diode forming region 24 of the current collecting body 22B. Next, the N-type semiconductor layers 32A - 32E are formed as spaced with prescribed distance. The N-type semiconductor layer 32A is formed at such a position as to sit astraddle on the current collecting body 22B and the insulating layer 31 and the remaining N-type semiconductor layers 32B - 32E are formed on the insulating layer 31. Incidentally, the N-type semiconductor layers are formed at five positions because five diode elements 35 are formed. Then, the P-type semiconductor layers 33A - 33E are formed at such positions as to sit astraddle on the N-type semiconductor layers 32A - 32E and the insulating layer 31 as shown in (d).

Next, the metal layers 34 are formed so as to connect electrically the adjacent P-type semiconductor layers and the N-type semiconductor layers as shown in (e) . To be specific, the metal layers 34A is formed so as to cover the P-type semiconductor layer 33A and the N-type semiconductor layer 32B, the metal layer 34B is formed so as to cover the P-type semiconductor layer 33B and the N-type semiconductor layer 32C, the metal layer 34C is formed so as to cover the P-type semiconductor layer 33C and the N-type semiconductor layer 32D, and the metal layer 34D is formed so as to cover the P-type semiconductor layer 33D and the N-type semiconductor layer 32E. Then, the insulating layer 31 is formed so as to cover all the laminated bodies excepting part of the N-type semiconductor layer 32E as shown in (f) . Finally, the metal layer 34E is formed so as to cover the insulating layer 31 with the object of forming connection with the N-type semiconductor layer 32E as shown in (g).

By performing the preceding steps, it is made possible to form one diode element 35 with the current collecting body 22B, the N-type semiconductor layer 32A, the P-type semiconductor layer 33A, and the metal layer 34A. In the case of this process of production, therefore, the five diode elements 35 are destined to be formed along the longitudinal direction of the current collecting body 22B.

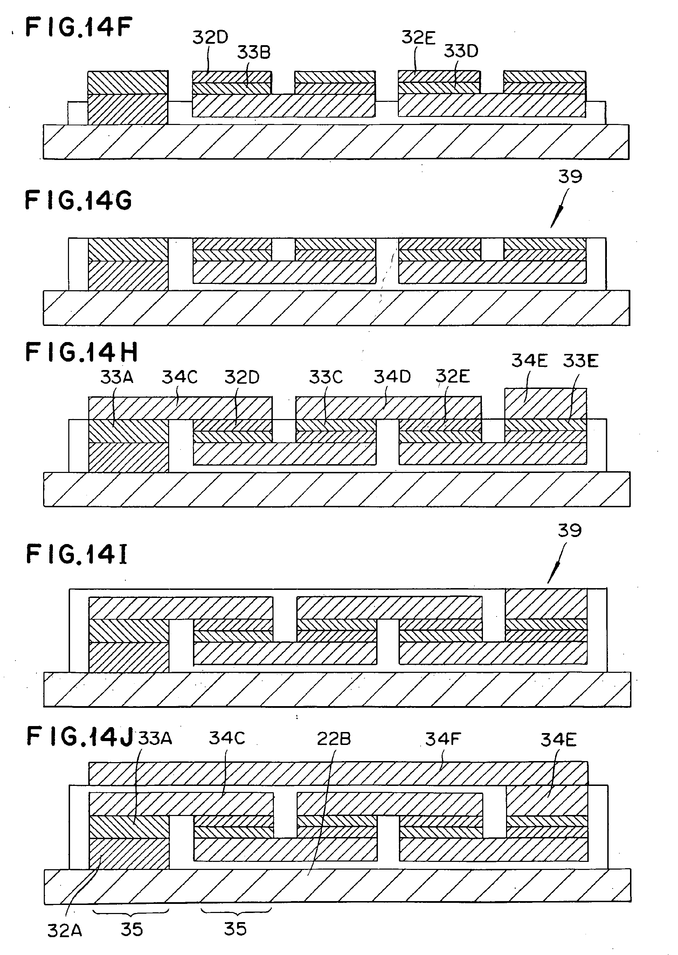

The process of production illustrated in Fig. 14A and Fig. 14B is a procedure which is intended to form a group of diodes 50 by lining diode elements 35 in the lateral direction of the current collecting body as described in the mode 2 of embodiment (Fig. 9).

For a start, the current collecting body 22B which is shown in (a) is prepared and the insulating layers 31A and 31B which ae shown in (b) are formed on the diode forming region 24 of the current collecting body 22B. Next, depressions are formed by etching one each at two positions of the insulating layer 31B as shown in (c) and the metal layers 34A and 34B are formed above these depressions. Then, the N-type semiconductor layers 32A - 32C are formed between the insulating layers 31A and 31B and partly on the metal layers 34A and 34B as shown in (d) . Next, the P-type semiconductor layers 33A - 33E are formed on the N-type semiconductor layers 32A - 32C and in the regions of the metal layers 34A and 34B in which the N-type semiconductor layer 32B and 32C are not formed as shown in (e) . Next, the N-type semiconductor layers 32D and 32E are formed selectively on the P-type semiconductor layers 33B and 33D as shown in (f). Then, the depressed part of the laminated body 39 is filled up with an insulating material to give the laminated body a flat upper surface.

Next, the metal layers 34 for connecting the adjacent P-type semiconductor layers and N-type semiconductor layers are formed as shown in (h). To be specific, the metal layer 34C is formed so as to cover the P-type semiconductor layer 33A and the N-type semiconductor layer 32D, the metal layer 34D is formed so as to cover the P-type semiconductor layer 33C and the N-type semiconductor layer 32E, and the metal layer 34E is formed on the P-type semiconductor layer 33E. Then, the depressed part of the laminated body 39 is filled up with an insulating material so as to give the laminated body with a plat upper surface as shown in (i). Then, the metal layer 34F is formed so as to cover the insulating layer with the object of finally effecting connection with the metal layer 34E as shown in (j).

By carrying out the preceding steps, it is made possible to form one diode element 35 with the current collecting body 22B, the N-type semiconductor layer 32A, the P-type semiconductor layer 33A, and the metal layer 34C. Thus, in the case of the present process of production as well, the five diode elements 35 are formed along the longitudinal direction of the current collecting body 22B.

One example of the process for production of the group of diodes 50 has been illustrated. The group of diodes 50 can be formed by other process than the process of production described above. Further, instead of directly forming the group of diodes 50 on the current collecting body, the group of diodes 50 may be formed as a single semiconductor element and disposed within the battery cell (between the current collecting bodies).

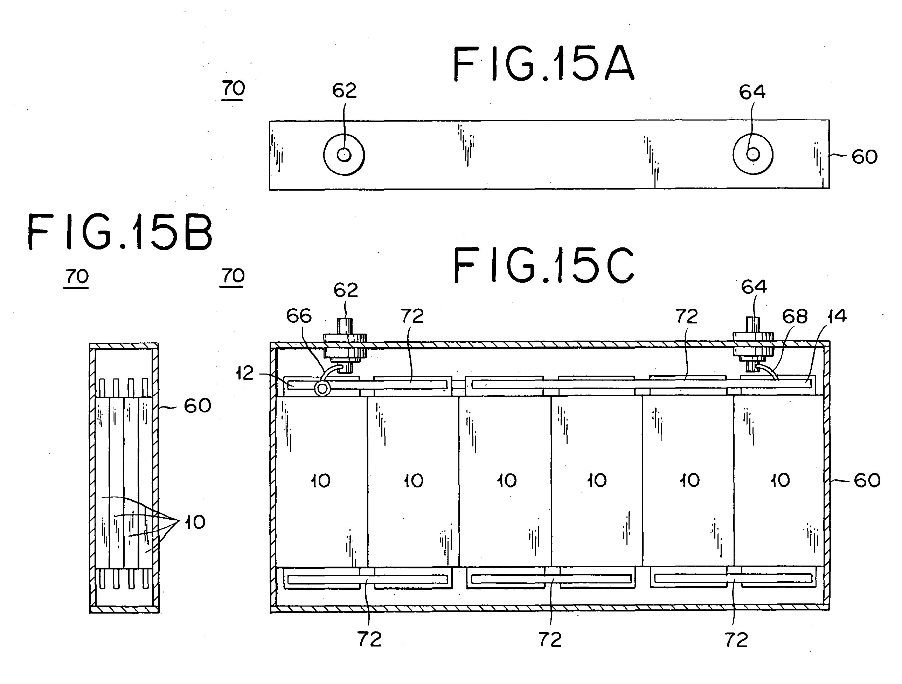

This invention embraces formation of a group battery by having at least two flat secondary batteries 10 mentioned above (refer to Fig. 1) connected in series or in parallel. To be specific, a group battery 70 may be obtained, for example, by connecting four secondary batteries 10 in parallel as shown in Fig. 15 (refer to Fig. 15B), arraying six rows each of four parallelly connected secondary batteries 10 in series, and stowing the resultant array in a group battery case 60 made of a metallic material (refer to Figs. 15A - C) . The group battery 70 which can cope with any arbitrary amperage, voltage, and capacity can be provided by thus connecting a desired number of secondary batteries 10 in a serial-parallel pattern.

Incidentally, a positive pole terminal 62 and a negative pole terminal 64 of the group battery 70 disposed on the lid in the upper part of the group battery case 60 and the positive pole tab 12 and the negative pole tab 14 of each of the secondary batteries 10 are electrically connected by the use of a positive pole terminal lead wire 66 and a negative pole terminal lead wire 68 of the group battery 70. For the purpose of connecting four secondary batteries 10 in parallel, it suffices to connect electrically the electrode tabs 12 and 14 of each of the secondary batteries 10 to the repevant terminals by the use of proper connecting members such ass spacers. For the sake of connecting in series six sets each of four parallelly connected secondary batteries 10, it suffices to cause the electrode tabs 12 and 14 of each of the secondary batteries 10 sequentially connected by the use of proper connecting members such as spacers 72 (refer to Fig. 15C).

In the group battery, the application of this invention brings the effect of averaging the voltage during the course of charging and simplifies greatly the part using the conventional control circuit. In the case of the group battery using a plurality of batteries, when the individual batteries have dispersed capacities, this dispersion has a high possibility of inducing overcharging or overdischarging and consequently posing a serious problem of finding a way of uniformizing their capacities. The application of this invention can give a solution to this problem.

Then, by causing at least two group batteries 70 mentioned above to be connected in series, in parallel, or in series-parallel thereby forming a group battery module, it is made possible to cope comparatively inexpensively with the demand for the capacity and output of a battery for a varying purpose of use without requiring new manufacture of a group battery. The group battery module which is formed by connecting a plurality of group batteries in series-parallel, when part of the batteries or the group batteries encounter an accident, can be repaired by simply replacing the batteries in trouble.

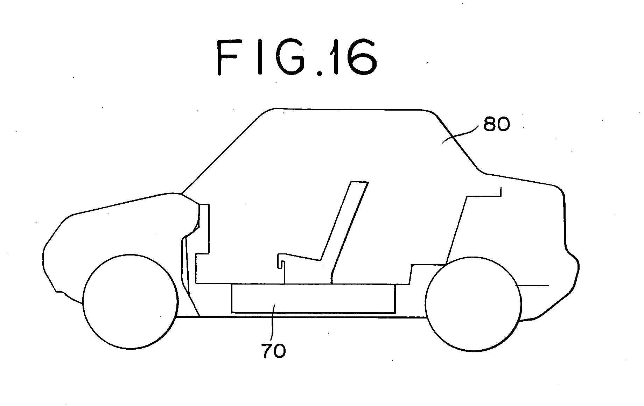

In an electric vehicle 80, the group battery 70 is mounted under the seat in the central part of the body thereof as shown in Fig. 16. The part below the seal is selected with the object of enabling the interior of the body and the trunk of the vehicle to occupy large spaces. The position for mounting the battery does not need to be limited to the part below the seat . The part below the trunk of the vehicle or the engine room in the front part of the vehicle may be used instead. This invention is particularly effective in an electric vehicle which repeats charging and discharging within a comparatively brief period of time and is effective for the purpose of manufacturing an electric vehicle using a multiplicity of batteries inexpensively while retaining high reliability.

The secondary battery contemplated by this invention has the group of diodes connected between the positive pole terminal and the negative pole terminal in the direction in which the forward direction voltage is applied as described above. When the voltage between the positive pole terminal and the negative pole terminal rises above a certain level, the magnitude of the resistance offered by the group of diodes is lowered to give rise to a bypass circuit for the electric current, ensure the safety of the battery, and exalt the service life of the battery.

### Examples

The present example of the invention uses the secondary battery of the structure shown in Fig. 1, namely the second battery having a plurality of diode elements connected in series in the forward direction. The number of steps of series connection is increased or decreased in conformity with the operating voltage of the secondary battery. Though the number of steps of series connection depends on the kind of battery, particularly the lithium secondary battery is preferred to have such a number of steps of series connection which falls in the approximate range of 3 - 6 relative to the battery cell. Then, the number of diode elements connected in parallel is increased or decreased in conformity with the magnitude of the electric current flowing to the secondary battery. As a means to produce the same effect as increasing the number of steps of parallel connection, the method of giving the diode elements an increased cross section may be cited. Since the batteries having particularly high output and high input allow flow of a large amount of electric current thereto, the electric current of such a large amount can flow to the diode elements used for bypassing. More often than not, therefore, the diode elements are required to have a larger surface area than usual. The measure of having one diode element connected in the reverse direction in addition to having a plurality of diode elements connected in series in the forward direction to the battery cell is effective in the sense of preventing overdischarging.

### [Example 1]

A group of diodes was manufactured by connecting in series five 6A Diodes made by General Semiconductor Corp. When a voltage was applied gradually to the group of diodes and the electric current flowing out of them was measured, results similar to those shown in Fig. 6 were obtained. Next, a 20-unit module battery was manufactured by preparing 20 such groups of diodes, connecting 20 separately prepared canned 1600 mAh lithium ion batteries (4.2 V during ordinary charging and 2.5 V during discharging) one each in the forward direction to the 20 groups of diodes, and thereafter connecting the individual batteries in series. This module battery was not furnished particularly with a protective circuit. Further, 20 such module batteries were prepared and subjected to charging and discharging at 3200 mA and 50 V of lower limit and 80 V of upper limit respectively of cutoff voltage up to 100 repetitions. Thereafter, the module batteries were examined to find any sign of abnormality and were tested for 1C discharge capacity from 72 V.

As a result, none of the 20 module batteries was found to have induced any leakage and none of them was found to emit smoke. The module batteries had a capacity (average) of 752 mAh prior to the cycles and a capacity (average) of 665 mAh after the cycles. The ratio of the charging capacity to the discharging capacity in the final cycle was 96%.

### [Example 2]

To each of the module batteries of Example 1, one 6A diode produced by General Semiconductor Corp was connected in the reverse direction. Twenty (20) such module batteries were prepared and were subjected to charging and discharging at 3200 mA and 50 V of lower limit and 80 V of upper limit respectively of cutoff voltage up to 100 repetitions. Thereafter, the module batteries were examined to find any sign of abnormality and tested for 1C discharge capacity from 72 V.

As a result, none of the 20 module batteries was found to have induced any leakage and none of them was found to emit smoke. The module batteries had a capacity (average) of 748 mAh prior to the cycles and a capacity (average) of 681 mAh after the cycles. The ratio of the charging capacity to the discharging capacity in the final cycle was 95%.

### [Comparative Example 1]

Twenty (20) module batteries were prepared by following the procedure of Example 1 while omitting use of the group of diodes and were subjected to charging and discharging at 3200 mA and 50 V of lower limit and 80 V of upper limit respectively of cutoff voltage up to 100 repetitions. Thereafter, the module batteries were examined to find any sign of abnormality and tested for 1C discharge capacity from 72 V.

As a result, six of the twenty module batteries were found to induce leakage and one of them was found to emit smoke. The module batteries had a capacity (average) of 758 mAh prior to the cycles and a capacity (average) of 420 mAh after the cycles. The ratio of the charging capacity to the discharging capacity in the final cycle was 98%.

When Comparative Example 1 is compared with Example 1 and Example 2, it is noted that Comparative Example 1 which was not provided with the group of diodes was suspected to entail leakage or emission of smoke and involve a large degree of reduction of capacity after repeated cycles of charging and discharging. The results indicate that the provision of the group of diodes results in elongating the service life of the battery. It is also noted that the consumption of energy by the addition of diodes is very small.

### [Example 3]

A SUS 316 stainless steel sheet measuring 20 µm in thickness and 20 cm x 30 cm in surface area was prepared. A coating material produced by dissolving lithium manganese, LiMn₂O₄, having a diameter of 10 µm, acetylene black, and a PVDF binder at a composition of 90 : 5 : 5 in N-methyl pyrrolidone was applied to the central part, 18 cm x 26 cm, on one side of this sheet, and dried to prepare a positive pole active substance layer 50 µm in thickness.

Next, a coating material produced by dissolving hard carbon having a diameter of 10 µm in diameter and a PVDF binder in a composition of 90 : 10 in N-methyl pyrrolidone was applied to the central part, 18 cm x 26 cm, on the rear side of the sheet and dried to prepare a negative pole active substance layer 50 µm in diameter.

At the positions 10 mm from the opposite edges of the short side, 20 cm, on the positive electrode active substance layer side of the stainless steel sheet, silver, p-dope silicon, and n-dope silicon were each sputtered at the range of 20 cm x 0.1 cm to a thickness of 1 µm up to five repetitions to form five layers each of a group of diodes.

In each of the areas adjoining the groups of diodes, an insulating layer of aluminum oxide was formed by sputtering in a width of 0.2 cm. Silver was further sputtered in a thickness of 1 µm on the uppermost layer and the resultant silver coat was coated with silver paste. The application of the paste was carried out so as to prevent the paste from protruding out of the aluminum oxide insulating layer.

To the exposed part of the stainless steel sheet on which no group of diode was formed and no electrode was formed, carboxylic acid-modified polypropylene was pasted.

A microporous polypropylene film having a thickness of 20 µm and measuring 20.5 cm × 30.5 cm in surface area was prepared as a separator. This film was impregnated with an ethylene carbonae : propylene carbonate (1 : 1 vol) solution of polyethylene oxide macromonomer, 2,2-azobisisobutyronitrile, and 1 mol/L hexafluorophosphoric acid LiPF₆ and subsequently subjected to ultraviolet irradiation to manufacture a gel electrolyte-containing separator composed of 90 wt% of an electrolyte component and 10 wt% of polyethylene oxide.

The positive pole active substance on the stainless steel sheet was covered with this separator. Twenty (20) such stainless steel sheets were superposed to manufacture a 400 mAh bipolar secondary battery formed of 20 units of series connection.

The diode forming part was so formed that the part coated with the silver paste might adhere fast to the electrode opposite thereto. At this time, the stainless steel sheets forming the uppermost and lowermost layers were each coated on one side only so that the outer sides thereof might expose stainless steel surfaces and these stainless steel sheets were each joined to a copper foil for the lead.

This bipolar battery was finally finished as wrapped in a sheathing material of aluminum laminate film. Twenty (20) such bipolar batteries were prepared and subjected to charging and discharging at 800 mA and a lower limit of 50 V and an upper limit of 80 V respectively of a cutoff voltage up to 100 repetitions. Subsequently, they were examined to find any sign of abnormality of module battery and tested for 1C discharge capacity from 72 V.

As a result, none of the 20 module batteries was found to induce leakage and none of them was found to emit smoke. The capacity (average) of the module batteries prior to the cycles was 202 mAh and the capacity (average) thereof after the final cycle was 171 mAh. Then, the ratio of the charging capacity to the discharging capacity in the final cycle was found to be 96%.

### [Comparative Example 2]

A bipolar secondary battery was manufactured by following the procedure of Example 3 while omitting the formation of a group of diodes. Twenty (20) such bipolar secondary batteries were prepared and subjected to charging and discharging at 800 mA and a lower limit of 50 V and an upper limit of 80V respectively of cutoff voltage up to 100 repetitions. Thereafter, they were examined to find any sign of abnormality and tested for 1C discharge capacity from 72 V.

As a result, seven of the 20 module batteries were found to induce leakage and two of them were found to emit smoke. Then, as many as ten of them were found to be inflated with the gas generated inside the battery. The capacity (average) of the module batteries prior to the cycles was 202 mAh and the capacity (average) after the cycles was 89 mAh. The ratio of the charging capacity to the discharging capacity in the final cycle was found to be 98%.

When Comparative Example 2 is compared with Example 3, it is noted that Comparative Example 2 which was not provided with the group of diodes was suspected to entail leakage or emission of smoke and involve a large degree of reduction of capacity after repeated cycles of charging and discharging. The results indicate that the provision of the group of diodes results in elongating the service life of the battery. It is also noted that the consumption of energy by the addition of diodes is very small.

It is noted that when the group of diodes are connected to the battery cell, the secondary battery can be made to operate very safely. Further even when diodes are annexed, the decrease of capacity during the course of performing charging and discharging in a brief period and the effect exerted on the degradation of performance is extremely small.

## Claims

1. A secondary battery 10 formed by interposing a nonaqueous electrolyte 27 between a positive pole and a negative pole, having a group of diodes 50 connected between the positive pole terminal 62 forming the positive pole and the negative pole terminal 64 forming the negative pole in the direction in which the forward direction voltage is applied.

2. A secondary battery 10 according of claim 1, wherein said group of diodes 50 have a plurality of diode elements 35 connected in series, connected in parallel, or connected both in series and in parallel.

3. A secondary battery 20 according to claim 1 or claim 2, wherein said group of diodes 50 include diode elements 35 which are connected between said positive pole terminal 62 and said negative pole terminal 64 in the direction in which the reverse direction voltage is applied.

4. A secondary battery 10 according to any of claims 1 through 3, wherein said group of diodes 50 are formed as a sole semiconductor element.

5. A secondary battery 10 according to any of claims 1 through 3, wherein said group of diodes 50 are formed by laminating a semiconductor material on a current collecting body 22A, 22B forming said positive pole terminal or said negative pole terminal.

6. A secondary battery 10 according to any of claims 1 through 5, wherein said secondary battery 10 is a bipolar secondary battery.

7. A secondary battery 10 formed by laminating a plurality of secondary batteries set forth in any of claims 1 through 6.

8. A group battery 70 formed by connecting a plurality of secondary batteries 10 set forth in claim 7 in series, in parallel, or in both series and parallel.

9. A vehicle 80 equipped with a secondary battery 10 set forth in any of claims 1 through 7 or with a group battery set forth in claim 8.
